# EUROPEAN PATENT SPECIFICATION

(11) **EP 0 574 068 B1**
(45) Date of publication and mention of the grant of the patent: **24.02.1999**
(21) Application number: 93201564.7
(22) Date of filing: 02.06.1993
(51) Int. Cl.: H04N 5/44

(54) **Apparatus for motion-compensated picture signal interpolation**
Anordnung zum bewegungsausgeglichenen Interpolieren eines Bildsignals
Dispositif d'interpolation compensée en mouvement pour un signal d'image

(30) Priority: 11.06.1992 EP 92201708
(43) Date of publication of application: 15.12.1993
(73) Proprietor: Koninklijke Philips Electronics N.V., 5621 BA Eindhoven (NL)
(72) Inventor: de Haan, Gerard, NL-5656 AA Eindhoven (NL); Ojo, Olukayode Anthony, NL-5656 AA Eindhoven (NL); Biezen, Paul Wilhelm Albert Cornelis, NL-5656 AA Eindhoven (NL); Huijgen, Hendrik, NL-5656 AA Eindhoven (NL)
(74) Representative: Steenbeek, Leonardus Johannes

(56) References cited:
- EP-A- 0 478 217
- FERNSEH- UND KINOTECHNIK, vol.42, no.4, 1988, page 177 - 184, 'ASPEKTE DER NORMWANDLUNG VON HDTV IN BESTEHENDE FERNSEHSTANDARDS'

## Description

The invention relates to an apparatus for motion-compensated picture signal interpolation, such as a field rate doubling apparatus for obtaining a flicker-free display of picture signals, or an interlace-to-progressive scan converter. The invention further relates to a receiver for television signals including such an apparatus.

Motion-compensated picture signal interpolation is known in the art. Although experiments have shown that images obtained by motion-compensated picture signal interpolation techniques can be better than those obtained by other picture signal interpolation techniques, motion-compensated picture signal interpolation is not yet widely used because of the complexity of the hardware for the motion vector estimation which is necessary to furnish motion vectors, and for the motion-compensated interpolation itself. More specifically, current implementations of motion vector estimation and compensation apparatuses require several expensive field memories. For example, United States Patent US-A-4,731,651 describes a field number converter in which a first field memory is used for motion vector estimation, while second and third field memories are used for motion-compensated interpolation by means of the estimated vectors.

The article "Aspekte der Normwandlung von HDTV in bestehende Fernehstandards" in the periodical Fernseh- und Kino-Technik, Vol. 42, No. 4/1988, pp. 177-184, describes an apparatus for converting a picture signal having 60 interlaced fields per second into a picture signal having 50 interlaced fields per second. In this article, it is proposed to estimate motion vectors on the basis of input and output signals of an image memory, *i.e.* a two-field memory, and to perform a motion-compensated position interpolation on the basis of the input and output signals of the same two-field memory by means of the estimated motion vectors. However, the article states that this motion-compensated position interpolation is to be realized later when optimal and feasible motion detection and motion-compensation methods have been developed.

It is, *inter alia,* an object of the invention to provide a less expensive motion-compensated picture signal interpolation apparatus. To this end, a primary aspect of the invention provides a motion-compensated picture signal interpolation apparatus as defined in claim 1.

In accordance with an attractive feature of the invention, several line memory sections are dispensed with in that the interpolation apparatus further comprises a motion vector memory for storing the estimated motion vectors, while the motion-compensated interpolator furnishes the sequence of motion-compensated output fields on the basis of the motion vectors stored in this motion vector memory. This yields a sufficiently large delay between the estimation of a motion vector for a given block and the instant when this motion vector is needed for carrying out a motion-compensated interpolation, so that the same line-memory sections can be used for both motion vector estimation and motion-compensated interpolation. The invention is especially simple when a motion vector estimator is used which employs motion vectors estimated during a previous field period, like the one described in European Patent Application EP-A-0,415,491 (PHN 13,068), because then no additional motion vector memory is required.

A very advantageous aspect of the invention is adapted to improve the motion portrayal of a sequence of television fields originating from film. As these television fields are obtained by scanning each film picture twice so as to obtain two television fields, 50 of such television fields still represent only 25 movement phases per second. By means of motion vector estimation and motion-compensated interpolation in accordance with the present invention, the number of film movement phases per second can be doubled in a very attractive manner. In one embodiment, the number of television fields per second is maintained, while in another embodiment the number of television fields per second is doubled; in both embodiments, the output fields represent a number of movement phases per second which is doubled with respect to the number of movement phases per second represented by the input fields. This aspect of the invention is defined in claims 2, 4 and 5.

A simple manner of providing a sequence of non-interlaced output pictures is defined in claim 6, in which motion vectors estimated between a first and a second field are used to interpolate lines from a third field between lines from the second field to obtain a progressively scanned output field.

Claim 7 defines a receiver for television signals in which the motion-compensated picture signal interpolation apparatus of claim 1 is used to enhance received and decoded television signals.

These and other aspects of the invention will be apparent from and elucidated with reference to the embodiments described hereinafter.

In the drawings:
Fig. 1 shows a block diagram of an embodiment of a field number converter in accordance with the invention;
Fig. 2 shows a time diagram of successive fields at several locations in the embodiment of Fig. 1;
Fig. 3 shows a time diagram of successive fields at several locations in the embodiment of Fig. 1 when film fields are processed;
Fig. 4 shows a time diagram of successive fields at several locations in an embodiment of an interlaced-to-progressive scan converter which maintains the field frequency;
Fig. 5 shows a time diagram of successive fields at several locations in a first embodiment of a film motion portrayal improvement converter; and
Fig. 6 shows a time diagram of successive fields at several locations in the embodiment of Fig. 1.

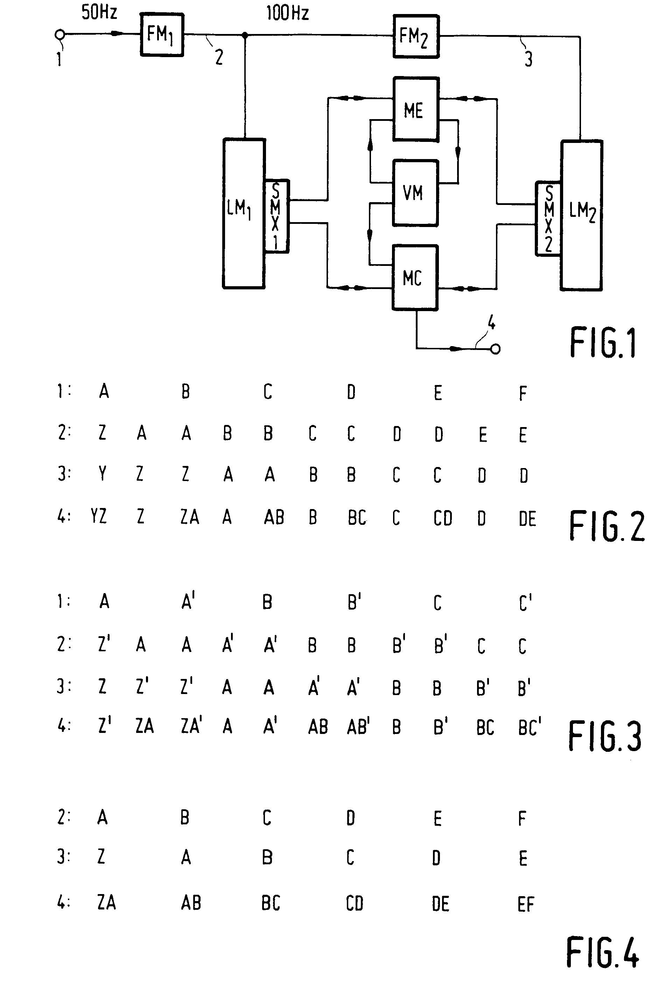

In the field number converter embodiment shown in Fig. 1, a first field memory FM1 receives a picture signal whose field rate is 50 Hz. In Fig. 2, line 1 shows a time diagram of the incoming field sequence A, B, C, D, E, F of the picture signal. By means of the field memory FM1, the field rate of the picture signal is doubled by reading each field of the picture signal twice from the first field memory FM1. In Fig. 2, line 2 shows a time diagram of the field sequence supplied by the field memory FM1. This sequence is applied to a second field memory FM2, which writes each second occurrence of each field applied to it, while the second field memory FM2 ignores the first time when a field is applied to it. Each field which has been written into the second field memory FM2 is read twice from the second field memory FM2. In Fig. 2, line 3 shows a time diagram of the field sequence supplied by the second field memory FM2.

The embodiment of Fig. 1 further comprises a single set of two line memory sections LM1, LM2, each comprising a tapped delay line of, for example, 5 line memories and 16 pixel memories per line memory tap, so that each pixel in a given area can be reached.

Fig. 1 further shows a motion vector estimator ME which communicates with the line memory sections LM1, LM2 through switch matrices SMX1, SMX2, *i.e.* the motion vector estimator ME furnishes candidate motion vectors to the line memory sections LM1, LM2, and the line memory sections LM1, LM2 furnish corresponding pixel values to the motion vector estimator ME. As disclosed in EP-A-0,415,491 (PHN 13,068), the motion vector estimator ME preferably uses also vectors determined for a previous field which are supplied by a motion vector memory VM. In accordance with the present embodiment of the invention, these previous field vectors are also applied to a motion-compensated interpolator MC which, like the motion vector estimator ME, communicates with the line memory sections LM1, LM2 through the switch matrices SMX1, SMX2. In Fig. 2, line 4 shows a time diagram of the output field sequence of the motion-compensated field rate doubling apparatus of Fig. 1, in which AB indicates an interpolated field based on input fields A and B, etc.

It is a feature of the present aspect of the invention that the input to the motion vector estimator ME is constituted by fields at a 100 Hz field rate rather than at the usual 50 Hz field rate. The use of 100 Hz input fields requires a doubling of the operation speed and/or the hardware. Now that both the motion vector estimator ME and the motion-compensated interpolator MC operate on 100 Hz fields, one and the same single field memory FM2 can be used for the motion vector estimation and the motion-compensated interpolation. This common use of a single field memory implies a significant economy of hardware in comparison with prior art architectures.

The circuit of Fig. 1 operates as follows. The first time when two 100 Hz input fields are available, for example fields Z (Fig. 2, line 3) and A (Fig. 2, line 2) when line 4 indicates that field Z is output, motion vectors are estimated between fields Z and A. These vectors are stored in the motion vector memory VM and used to create output field ZA the next time when fields Z and A are available. During the creation of the output field ZA, the motion vector estimator ME may again estimate the vectors between the fields Z and A to improve the quality of the vectors stored in the motion vector memory VM, which vectors are used as previous field vectors when motion vectors are estimated between fields A (Fig. 2, line 3) and B (Fig. 2, line 2) during the field period in which line 4 indicates that field A is output. The use of the output vectors of the motion vector memory VM for the motion-compensated interpolation made it possible to have only a single set of line memory sections LM1, LM2, because the motion vector memory VM provides for the required delay between the instant when the motion vector for a given block is estimated and the instant when this motion vector is needed for the motion-compensated interpolation. Without the present invention, it is alternatively possible to carry out the motion-compensated interpolation with motion vectors taken directly from the motion vector estimator ME, but then an expensive additional set of line memory sections is required to provide for the required delay. As the motion vector estimator disclosed in EP-A-0,415,491 (PHN 13,068) incorporates a motion vector memory VM anyway, the output of this motion vector memory VM is used to great advantage to allow for a common use of the single set of line memory sections LM1, LM2 both for motion vector estimation and motion-compensated interpolation.

During the field periods in which no motion-compensated interpolation takes place, the output field is obtained from the output of the second field memory FM2 through the line memory section LM2 and the motion-compensated interpolator MC. Alternatively, the output field may be taken directly from the second field memory during these field periods by means of a switch (not shown) selecting between the output of the motion-compensated interpolator and the output of the second field memory FM2.

Fig. 3 shows a time diagram of successive fields at several locations in the field number converter embodiment of Fig. 1 when film fields are processed. In Fig. 3, input fields A and A' originate from the same film picture, etc. While lines 1 through 3 of Fig. 3 correspond to lines 1 through 3 of Fig. 2, line 4 is different. In line 4 of Fig. 3, pairs of input fields (for example, A and A') are alternated with pairs of interpolated fields (for example, AB and AB'). Interpolated field AB is created by means of motion vectors estimated between fields Z' and A. These motion vectors are still available because the contents of the motion vector memory VM are not changed when two fields (for example, A and A') originating from the same film picture are present at the output and the input of the second field memory FM2. Interpolated field AB' is created by means of motion vectors estimated between fields A' and B during the first time when fields A' and B were available at the output and the input of the second field memory FM2.

When this film field number converter is analyzed in greater detail, two aspects can be recognized. The first aspect is the common use of the single field memory FM2 for both motion vector estimation and motion-compensated interpolation, the advantages of which have been set out above. The second aspect is that the motion portrayal of the film field sequence is improved by increasing the number of movement phases per second from 25 Hz to 50 Hz by means of motion-compensated interpolation. In the input film field sequence, the 50 incoming fields per second represent only 25 movement phases per second because, as is common practice, such a sequence is obtained by scanning each 25 Hz film picture (picked up at 24 Hz) twice to obtain even and odd interlaced 50 Hz television fields. Each time, a pair of two successive fields relates to the same movement phase. In the output field sequence, the 100 Hz fields per second represent only 50 movement phases per second because in the sequence A A' AB AB', fields A, A' and AB, AB' constitute only two movement phases. Accordingly, this aspect of the invention provides a 50 movement phases per second motion-compensated field sequence, in which each field is "repeated" to obtain a 100 Hz field sequence, whereby pairs of input fields are alternated with pairs of interpolated fields. This aspect is based on the recognition that, with the risk of motion-compensation artifacts in mind, it is safer to create only one additional movement phase per available movement phase by means of motion-compensated interpolation followed by a simple field-repetition, than to create three additional movement phases per available movement phase by means of motion-compensated interpolation when it is desired to have a 100 Hz output field rate. As far as the latter aspect is concerned, the positioning and connections of the motion vector estimator ME are of minor importance.

A further aspect of the invention provides an interlaced-to-progressive scan converter which maintains the field frequency. An embodiment of this converter is identical to the embodiment shown in Fig. 1, however, without the first field memory FM1. A corresponding time diagram is shown in Fig. 4 to explain the operation of this embodiment. Output signal line 4 of Fig. 4 shows that each non-interlaced output field is obtained by motion-compensated interpolation, for example, by means of inserting motion-compensated lines from interlaced input field B between the lines of interlaced input field A. The motion vectors required for this motion-compensated insertion to produce output field AB are furnished by the vector memory which contains vectors estimated when input fields Z and A were present at the output and the input of the field memory FM2. Again, the advantage is achieved that only a single field memory FM2 and a single set of line memory sections LM1, LM2 are required for both motion vector estimation and motion-compensated interpolation. Although one could say that vectors of the "wrong" time interval are used, this causes no serious problems when the vector field is sufficiently consistent in the course of time; the motion vector estimator described by EP-A-0,415,491 (PHN 13,068), provides a vector field which is sufficiently consistent. It should be noted that the article "Coding television signals at 320 and 64 kbit/s" by G. Kummerfeldt et al., Proceedings of the second international technical symposium on optical and electro-optical applied science and engineering, Cannes 1985, SPIE Vol. 594 Image Coding (1985) pp. 119-128, already proposes to use motion parameters estimated between first and second fields for extrapolating first additional fields between the second and a third field, while second additional fields between the second and third fields are created on the basis of motion parameters estimated between these second and third fields. However, since in this article, motion parameters are estimated in an encoder and used in a decoder, the article includes no suggestion that motion vector estimation and motion-compensated interpolation can be carried out by means of the same line memory sections if motion vectors estimated during the "wrong" time interval are used.

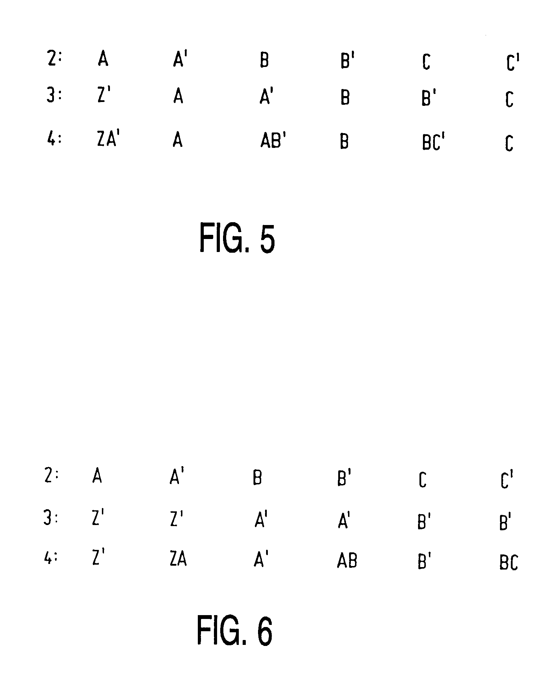

Yet another aspect of the invention provides a converter for improving the motion portrayal of picture signals originating from movie film to obtain, for example, 50 movement phases per second instead of the usual 25 movement phases per second corresponding to a sequence of pairs of 50 Hz fields, whereby both fields of each pair belong to the same movement phase, *i.e.* the same film picture. A first embodiment of this converter is identical to the embodiment shown in Fig. 1, again without the first field memory FM1. A corresponding time diagram is shown in Fig. 5 to explain the operation of this embodiment. A comparison of lines 2 and 3 of Fig. 5 shows that this time the field memory FM2 is simply used as a field delay. When two fields from the same movement phase are present at the terminals of the field memory FM2, one of them is output. When two fields from different movement phases are present at the terminals of the field memory FM2, a motion-compensated interpolation is performed. In a similar manner as in the previous embodiment illustrated by means of the time diagram of Fig. 4, vectors estimated between fields Z' and A are used to interpolate between fields A' and B.

With the time diagram of Fig. 6, it is also possible to use the embodiment shown in Fig. 1 again, without the first field memory FM1. In that situation, motion vectors estimated when fields A' and B are present at the output and the input of the field memory FM2 are used to create output field AB when fields A' and B' are present at the output and the input of the field memory FM2.

Still another embodiment of the film motion portrayal improvement converter is especially adapted for 60 Hz countries. In such countries, every two successive 24 Hz film pictures F1 F2 are commonly converted into 60 Hz television fields by scanning each first film picture F1 two times and each second film picture F2 three times, so that a sequence like F1 F1 F2 F2 F2 etc. results. In accordance with the present embodiment, the motion portrayal of this sequence is improved by replacing the first occurrence of the field F2 by a motion-compensated field Fmc, so that the sequence F1 F1 Fmc F2 F2 results. This embodiment can easily be realized with the block diagram shown in Fig. 1 without the first field memory FM1.

It should be noted that the above-mentioned embodiments illustrate rather than limit the invention, and that those skilled in the art will be able to design many alternative embodiments, all falling within the scope of the following claims.

## Claims

1. A motion-compensated picture signal interpolation apparatus comprising:
a single field memory (FM2) for delaying a picture signal field sequence;
motion vector estimation means (ME) for furnishing motion vectors, said motion vector estimation means (ME) being coupled to an input and an output of said single field memory (FM2) through first (LM1) and second (LM2) line memory sections, respectively;
motion-compensated interpolation means (MC) for furnishing a sequence of motion-compensated output fields on the basis of said motion vectors, said motion-compensated interpolation means (MC) being coupled to said input and said output of said single field memory (FM2) through said first (LM1) and said second (LM2) line memory sections, respectively; and
a motion vector memory (VM) for storing said motion vectors, said motion-compensated interpolation means (MC) furnishing said sequence of motion-compensated output fields on the basis of motion vectors stored in said motion vector memory (VM).

2. A motion-compensated picture signal interpolation apparatus as claimed in claim 1, wherein in the presence of fields originating from film pictures, the contents of said motion vector memory (VM) are not changed when two fields originating from a same film picture are present at said input and said output of said single field memory (FM2), motion vectors estimated between a first (A') and a second (B) film picture being used to interpolate a field (BC') between said second (B') and a third (C) film picture. (Fig. 5)

3. A motion-compensated picture signal interpolation apparatus as claimed in claim 1, further comprising an input field memory (FM1) for applying said picture signal field sequence at a doubled field rate to said delaying single field memory (FM2), to said motion vector estimation means (ME), and to said motion-compensated interpolation means (MC).

4. A motion-compensated picture signal interpolation apparatus as claimed in claim 3, wherein in the presence of fields originating from film pictures, the contents of said motion vector memory (VM) are not changed when two fields originating from a same film picture are present at said input and said output of said single field memory (FM2), and said apparatus furnishes an output field sequence constituted by pairs of input fields alternated with pairs of interpolated fields. (Fig. 3)

5. A motion-compensated picture signal interpolation apparatus as claimed in claim 1, wherein in the presence of fields originating from film pictures, motion vectors estimated between a first (A') and a second (B,B') film picture are used to interpolate a field (AB) between said first (A') and second (B') film pictures. (Figs. 1+6)

6. A motion-compensated picture signal interpolation apparatus as claimed in claim 1, wherein motion vectors estimated between a first (A) and a second (B) field are used to interpolate lines from a third field (C) between lines from said second field (B) to obtain a progressively scanned field (BC). (Fig. 4)

7. A receiver for television signals, comprising:
means for receiving and decoding said television signals to obtain picture signals;
means coupled to said receiving and decoding means for enhancing said picture signals; and
characterized in that said enhancing means include a motion-compensated picture signal interpolation apparatus as defined in claim 1.

## Patentansprüche

1. Bewegungsausgeglichene Bildsignalinterpolationsanordnung mit:
einem einzigen Teilbildspeicher (FM2) zur verzögerung einer Bildsignalteilbildfolge; Bewegungsvektorschätzmitteln (ME) zum Liefern von Bewegungsvektoren, wobei diese Bewegungsvektorschätzmittel (ME) mit einem Edingang und einem Ausgang des genannten einzigen Teilbildspeichers (FM2) gekoppelt sind, und zwar über einen ersten (LM1) bzw. einen zweiten (LM2) Zeilenspeicherteil,
bewegungsausgeglichenen Interpolationsmitteln (MC) zum Liefern einer Folge bewegungsausgeglichener Ausgangsteilbilder auf Basis der genannten Bewegungsvektoren, wobei die genannten bewegungsausgeglichenen Interpolationsmittel (MC) mit dem genannten Eingang und dem genannten Ausgang des genannten einzeigen Teilbildspeichers (FM2) gekoppelt ist, und zwar über den genannten ersten (LM1) bzw. den genannten zweiten (LM2) Zeilenspeicherteil; und
einem Bewegungsvektorspeicher (VM) zur Speicherung der genannten Bewegungsvektoren, wobei die genannten bewegungsausgeglichenen Interpolationsmittel (MC) die genannte Folge bewegungsausgeglichener Ausgangsteilbilder liefern auf Basis von Bedwegungsvektoren, gespeichert in dem genannten Bewegungsvektorspeicher (VM).

2. Bewegungsausgeglichene Bildsignalinterpolationsanordnung nach Anspruch 1, wobei beim Vorhandensein von Teilbildem, herrührend von Filmbildern, der Inhalt des genannten Bewegungsvektorspeichers (VM) nicht geändert wird, wenn zwei Teilbilder, herrührend von demselben Filmbild an dem genannten Eingang und dem genannten Ausgang des genannten einzigen Teilbildspeichers (FM2) vorhanden sind, wobei die Bewegungsvektoren, die zwischen einem ersten (A') und einem zweiten (B) Filmbild geschätzt worden sind, zum Interpolieren eines Teilbildes (BC') zwischen dem genannten zweiten (B') und dritten (C) Filmbild benutzt wird. (Fig. 5)

3. Bewegungsausgeglichene Bildsignalinterpolationsanordnung nach Anspruch 1, weiterhin mit einem Eingangsteilbildspeicher (FM1) zum Zuführen der genannten Bildsignalteilbildfolge mit einer doppelten Teilbildfrequenz zu dem verzögernden einzigen Teilbildspeicher (FM2), zu den genannten Bewegungsvektorschätzmitteln (ME), und zu den genannten bewegungsausgeglichenen Interpolationsmitteln (MC).

4. Bewegungsausgeglichene Bildsignalinterpolationsanordnung nach Anspruch 3, wobei beim Vorhandensein von Teilbildern, herrührend von Filmbildern, der Inhalt des genannten Bewegungsvektorspeichers (VM) nicht geändert wird, wenn zwei Teilbilder, herrührend von demselben Filmbild, an dem genannten Eingang und dem genannten Ausgang des genannten einzigen Teilbildspeichers (FM2) vorhanden sind und die genannte Anordnung eine durch Paare von Eingangsteilbildern abgewechselt mit Paaren interpolierter Teilbilder gebildete Ausgangsteilbildfolge liefert. (Fig. 3)

5. Bewegungsausgeglichene Bildsignalinterpolationsanordnung nach Anspruch 1, wobei beim Vorhandensein von Teilbildern, herrührend von Filmbildern, Bewegungsvektoren, die zwischen einem ersten (A') und einem zweiten (B,B') Filmbild geschätzt worden sind, benutzt werden zur Interpolation eines Teilbildes (AB) zwischen dem genannten ersten (A') und dem genannten zweiten (B') Filmbild. (Fig. 1, 6)

6. Bewegungsausgeglichene Bildsignalinterpolationsanordnung nach Anspruch 1, wobei Bewegungsvektoren, die zwischen einem esrten (A) und einem zweiten (B) Teilbild geschätzt worden sind, benutzt werden zur Interpolation von Zeilen von einem dritten Teilbild (C) zwischen Zeilen von dem genannten zweiten Teilbild (B) zum Erhalten eines progressiv abgetasteten Teilbildes (BC). (Fig. 4)

7. Empfänger für Fernsehsignale, mit
Mitteln zum Empfangen und Decodieren der genannten Fernsehsignale zum Erhalten von Bildsignalen,
Mitteln, die mit den genannten Empfangs- und Decodiermitteln gekoppelt sind zur Verbesserung der genannten Bildsignale;
dadurch gekennzeichnet, daß die genannten Verbesserungsmittel eine bewegungsausgeglichene Bildsignalinterpolationsanordnung aufweist, wie in Anspruch 1 definiert.

## Revendications

1. Appareil d'interpolation compensée en mouvement de signaux d'image, appareil comprenant :
une seule mémoire de trames (FM2) pour retarder une séquence de trame de signal d'image;
des moyens d'estimation de vecteur de mouvement (ME) pour fournir des vecteurs de mouvement, lesdits moyens d'estimation de vecteur de mouvement (ME) étant couplés à une entrée et à une sortie de ladite mémoire de trames unique (FM2) par respectivement de première (LM1) et deuxième (LM2) sections de mémoire de lignes;
des moyens d'interpolation compensée en mouvement (MC) pour fournir une séquence de trames de sortie compensées en mouvement sur la base desdits vecteurs de mouvement, lesdits moyens d'interpolation compensée en mouvement (MC) étant couplés à ladite entrée et à ladite sortie de ladite mémoire de trames unique (FM2) par respectivement de ladite première (LM1) et de ladite deuxième (LM2) sections de mémoire de lignes, et
une mémoire de vecteurs de mouvement (VM) pour stocker lesdits vecteurs de mouvement, lesdits moyens d'interpolation compensée en mouvement (MC) fournissant ladite séquence de trames de sortie compensées en mouvement sur la base de vecteurs de mouvement stockés dans ladite mémoire de vecteurs de mouvement (VM).

2. Appareil d'interpolation compensée en mouvement de signaux d'image suivant la revendication 1, dans lequel, en présence de trames provenant d'images de film, le contenu de ladite mémoire de vecteurs de mouvement (VM) ne change pas lorsque deux trames provenant d'une même image de film sont présentes à ladite entrée et à ladite sortie de ladite mémoire de trames unique (FM2), des vecteurs de mouvement estimés entre une première (A') et une deuxième (B') images de film étant utilisés pour interpoler une trame (BC') entre ladite deuxième (B') et une troisième (C) images de film. (Fig. 5)

3. Appareil d'interpolation compensée en mouvement de signaux d'image suivant la revendication 1, comprenant en outre une mémoire de trames d'entrée (FM1) pour appliquer ladite séquence de trames de signal d'image suivant une fréquence de trame doublée à ladite mémoire de trames unique à retard (FM2), auxdits moyens d'estimation de vecteur de mouvement (ME), et auxdits moyens d'interpolation compensée en mouvement (MC).

4. Appareil d'interpolation compensée en mouvement de signaux d'image suivant la revendication 3, dans lequel, en présence de trames provenant d'images de film, le contenu de ladite mémoire de vecteurs de mouvement (VM) ne change pas lorsque deux trames provenant d'une même image de film sont présentes à ladite entrée et à ladite sortie de ladite mémoire de trames unique (FM2), et ledit appareil fournit une séquence de trames de sortie constituée de paires de trames d'entrée alternées avec des paires de trames interpolées. (Fig. 3)

5. Appareil d'interpolation compensée en mouvement de signaux d'image suivant la revendication 1, dans lequel, en présence de trames provenant d'images de film, des vecteurs de mouvement estimés entre une première (A') et une deuxième (B, B') images de film sont utilisés pour interpoler une trame (AB) entre lesdites première (A') et deuxième (B') images de film. (Fig. 1 et 6)

6. Appareil d'interpolation compensée en mouvement de signaux d'image suivant la revendication 1, dans lequel les vecteurs de mouvement estimés entre une première (A) et une deuxième (B) trames sont utilisés pour interpoler les lignes provenant d'une troisième trame (C) entre les lignes de ladite deuxième trame (B) pour obtenir une trame balayée sans entrelacement (BC). (Fig. 4)

7. Récepteur pour signaux de télévision, comprenant :
des moyens pour recevoir et décoder lesdits signaux de télévision pour obtenir des signaux d'image;
des moyens couplés auxdits moyens de réception et de décodage pour améliorer lesdits signaux d'image, et
caractérisé en ce que lesdits moyens d'amélioration comprennent un appareil d'interpolation compensée en mouvement de signaux d'image comme défini à la revendication 1.
